# EUROPEAN PATENT SPECIFICATION

(11) **EP 2 058 627 B1**
(45) Date of publication and mention of the grant of the patent: **12.01.2011**
(21) Application number: 08168305.4
(22) Date of filing: 04.11.2008
(51) Int. Cl.: G01C 22/02

(54) **Vehicle odometer system**
Fahrzeug-Odometersystem
Système d'odomètre pour véhicule

(30) Priority: 06.11.2007 GB 0721745
(43) Date of publication of application: 13.05.2009
(73) Proprietor: HALDEX BRAKE PRODUCTS LIMITED, Redditch, Worcestershire B98 9HA (GB)
(72) Inventor: Harrison, Dudley, Birmingham, B27 7AB (GB)
(74) Representative: Lawson, Alison Christina

(56) References cited:
- GB-A- 2 336 435

## Description

The present invention relates to a vehicle odometer system, particularly, but not exclusively, to an odometer for the trailer of an articulated heavy goods vehicle.

It is known for a trailer for an articulated heavy goods vehicle to have a trailer odometer, which is typically incorporated into an electronic braking system of the trailer. The electronic braking system typically includes wheel speed sensors which are used in the measurement of wheel slip required to provide the anti-lock braking function. The trailer odometer is typically provided by programming the electronic control unit (ECU) of the braking system to calculate the distance travelled by the trailer on the basis of the wheel speed measurements and the tyre rolling circumference.

It is known to provide electrical power for the electronic braking system from a permanent power source. In Europe, there is legislation in place which makes the use of a permanent power supply which complies with ISO7638, mandatory. A secondary back-up power supply is also provided, and it is known for the power for the secondary supply to be soured from the vehicle stop lamps (brake lights). It will be appreciated, however, that power from the vehicle stop lamps is only available during vehicle braking. As such, when powered by the secondary power supply, the odometer can only function to keep a tally of the distance travelled by the vehicle during vehicle braking. The odometer reading would therefore be invalid under such circumstances. It is known to overcome this problem by providing a battery as the secondary power supply, but this adds to the cost of the system, and isolation of the battery when used on vehicles subject to hazardous load restrictions can be problematic.

According to the present invention, we provide a vehicle odometer system including an electronic processor, the processor having an input for a signal indicating a brake of the vehicle to which the odometer system is fitted has been applied, and being adapted to calculate at least an estimate of the distance travelled by the vehicle using a first method based on the number of applications of the vehicle brake during a particular time period.

It has been found that for any given vehicle, there is a statistically consistent relationship between the number of applications of the vehicle brake and the distance travelled by the vehicle. By virtue of the invention, a reasonably accurate estimate of the distance travelled by vehicle can be obtained even if the odometer is powered using electrical power derived from the vehicle stop lamps.

Preferably the system further includes a first power supply which supplies electrical power to the processor, and a second power supply which supplies electrical power to the processor in the event of a failure of the first power supply.

Furthermore, the processor may be provided with an input for receiving a signal from a wheel speed sensor, the signal representing the speed of a wheel associated with the wheel speed sensor, and may be adapted to calculate the distance travelled using a second method based on the signal received at the wheel speed sensor input. In this case, the processor may calculate the distance travelled by the vehicle using the first method whilst the processor is supplied with power from the second power supply, and using the second method whilst the processor is supplied with power from the first power supply.

The first power supply may provide a continuous supply of power to the processor. The second power supply may provide power to the processor only when there is demand for vehicle braking, and may also supply power to a vehicle braking light.

The second method may comprise calculating the distance travelled by the vehicle by multiplying the wheel speed by the wheel rolling circumference. In this case the processor may be programmable, and may calculate the wheel rolling circumference based on an input provided by a user according the vehicle to which the system is fitted.

According to a second aspect of the invention we provide a vehicle braking system including a brake, a brake actuator by means of which the brake is operated, and an electronic control unit, the electronic control unit being adapted to transmit a braking signal to the brake actuator to affect operation of the brake, wherein the electronic control unit includes a vehicle odometer system in accordance with the first aspect of the invention.

According to third aspect of the invention we provide a method of estimating the distance travelled by a vehicle with at least one brake during a particular time period, the method including the steps of counting the number of times the vehicle brake is applied and calculating an estimate of the distance travelled during the time period based on the number of brake applications during the time period.

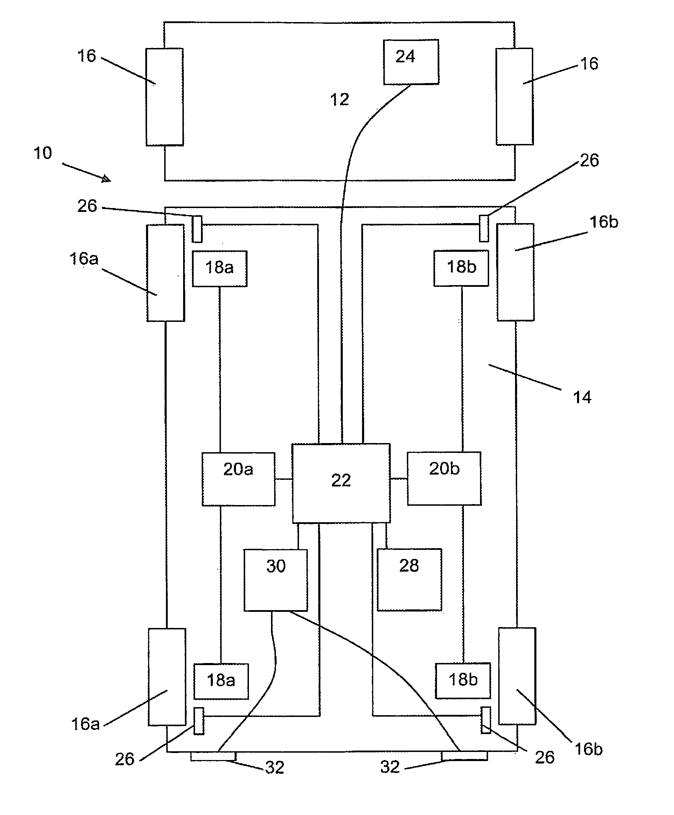

An embodiment of the invention will now be described, by way example dryly, with reference to the accompanying drawing which shows a schematic illustration of a vehicle fitted with a braking system according to the second aspect of the invention.

Referring now to the Figure, there is shown a vehicle 10 comprising a tractor 12 and a trailer 14. The trailer has wheels 16a, 16b, and is fitted with an electronic braking system (EBS) apparatus for controlling the stability of the vehicle, in particular for reducing the risk of vehicle rollaver. The wheels 16 of the trailer 14 are each fitted with a brake (not shown) which is operated by a brake actuator 18a, 18b. The brake actuators 18a, 18b in this example are operated pneumatically, but it will be appreciated they could equally be actuated by hydraulic fluid pressure.

A compressed air braking demand signal is supplied to the brake actuators 18a, 18b by one of two modulators 20a, 20b. In this example, the first modulator 20a is connected to the actuators 18a on a first side of the trailer 14, and the second modulator 20b is connected to the actuators 18b on the second side of the trailer 14. The actuators 18a, 18b could, however, all be connected to a single modulator, or more than one modulator could be provided for the actuators 18 on a particular side of the trailer 14.

The braking system further includes an electronic control unit (ECU) 22 which is electrically connected to the modulators 20a, 20b and to a brake pedal 24 provided in a driver's cab of the tractor 12. When operated, the brake pedal 24 generates an electrical braking demand signal which is transmitted to the ECU 22. The ECU 22 processes the braking demand signal, and transmits an appropriate electrical brake operating signal to the modulators 20a, 20b. Two brake lights 32 are provided at the rear of the trailer 14, and electrical power is supplied to these lights 32 during vehicle braking.

The braking system also includes a plurality of wheel speed sensors 26, one being provided to measure the rotational speed of each of the trailer wheels 16. The ECU 22 provides the braking system with anti-lock braking control (ABS) and is connected to the wheel speed sensors 26 to as to receive from each wheel speed sensor 26 a signal representing the rotational speed of the respective wheel 16. The ECU 22 is programmed with conventional ABS algorithms to modify the braking force applied to the wheels 16 if wheel lock is detected.

A first, permanent power supply 28 is connected to the ECU 22 and supplies electrical power to the ECU 22 continuously during operation of the vehicle 10, i.e. from engine start-up to engine shut-down. The first power supply 28 falls within the scope of ISO7638. A second, back-up power supply 30 is provided to supply electrical power to the ECU 22 in the event that the first power supply 28 fails, or is inadvertently not connected to the ECU 22. In this embodiment of the invention, the second power supply 30 is the power supply for the stop lamps. It will be appreciated, therefore, that when the second power supply 30 is in operation, electrical power supply to ECU 22 is present intermittently, i.e. during vehicle braking only.

The ECU is 22 is programmed such that, when power is supplied to the ECU 22 from the first power supply 28 the distance travelled by the trailer 14 is determined using a conventional method based on the wheel speed signal obtained from the wheel speed sensors 26. In order to do this, the ECU 22 is programmed with the rolling circumference of the wheels 16, and calculates an estimate of the distance travelled by the trailer 14 by multiplying the maximum wheel speed (rpm) at any point in time by the wheel rolling circumference, and integrating the resulting speed measurement.

The ECU 22 is provided with a non-volatile memory in which the total distance travelled by the trailer 12 can be retained when there is no power supplied to the ECU 22.

If power is supplied to the ECU 22 from the second power supply, it will be appreciated that using the above method would render the distance reading highly inaccurate, as the wheel speed signal is obtained only during vehicle braking, and therefore any distances travelled when there is no braking demand will not be included in the estimate of the total distance travelled by the trailer 14. To address this problem, the ECU 22 is programmed such that, when power is supplied to the ECU 22 from the second power supply 30, the ECU 22 records the number of brake applications and calculates an estimate of the distance travelled by the trailer whilst the second power supply 30 is active by multiplying the number of brake applications during that period by a predetermined constant representing the average distance travelled per brake application for that vehicle.

It has been found that for any given vesicle, there is a statistically consistent relationship between the number of applications of the vehicle brake and the distance travelled by the vehicle 10. By virtue of the use of this method, a reasonably accurate estimate of the distance travelled by vehicle 10 can be obtained even when the first, permanent power supply 28 has failed or is not connected to the ECU 22.

The predetermined constant can be programmed into the ECU 22 by a user, based on known data for the type of vehicle to which the ECU 22 is fitted. The ECU 22 can, if desired, be programmed to replace the initial preprogrammed average distance travelled per brake application with a replacement value determined by the ECU 22 by dividing the total distance travelled whilst the first power supply 28 is active (calculated as described above using wheel speed measurements) by the number of brake applications instigated during that period.

The ECU 22 is also programmed to add the distance travelled during use of the second power supply 30 to the distance retained in the ECU 22 non-volatile memory to give an estimate of the total distance travelled by the trailer 14 to date, and it will be appreciated that that this value could be a combination of a distance calculated using the wheel speed signals and a distance calculated based on the number of brake applications.

The non-volatile memory of the ECU 22 maintains a record of the tonal distance travelled by the trailer 12 and this can be used in determining whether the trailer 14 needs to be serviced. The ECU 22 can also be programmed to store the distance travelled for each trip carried out by the trailer 12.

It will be appreciated that, whilst it is advantageous for the braking system ECU 22 to provide the odometer function, this may be achieved using a separate electronic processor with an input for a signal representing the number of brake applications. Of course, the odometer could be adapted to obtain an estimate of the distance travelled by the trailer 14 based on the number of brake applications and a pre-programmed constant representing the average distance travelled per brake application for the vehicle to which the odometer is fitted at all times, and need not use the wheel speed measurement to calculate the distance travelled even when powered using a permanent power supply 28. It will be appreciated that, in this case, the odometer reading is likely to be less accurate than a reading calculated using the above method.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A vehicle odometer system including an electronic processor (22) the processor (22) having an input for a signal indicating a brake of the vehicle (10) to which the odometer system is fitted has been applied, being adapted to calculate at least an estimate of the distance travelled by the vehicle during a particular time period (10) using a first method based on the number of applications of the vehicle brake during that time period.

2. A system according to claim 1 wherein the system further includes a first power supply (28) which supplies electrical power to the processor (22) and a second power supply (30) which supplies electrical power to the processor in the event of a failure of the first power supply (28).

3. A system according to claim 1 or 2 wherein the processor (22) is provided with an input for receiving a signal from a wheel speed sensor (26), the signal representing the speed of a wheel associated with the wheel speed sensor (26), and is adapted to calculate the distance travelled using a second method based on the signal received at the wheel speed sensor input.

4. A system according to claim 2 and 3 wherein the processor (22) is adapted to use the first method to calculate the distance travelled by the vehicle whilst the processor is supplied with power from the second power supply (30), and to use the second method whilst the processor is supplied with power from the first power supply (28).

5. A system according to any one of claims 2 to 4 wherein, when active, the first power supply (28) provides a continuous supply of power to the processor (22).

6. A system according to any one of claims 2 to 5 wherein the second power supply (30) provides power to the processor (22) only when there is demand for vehicle braking.

7. A system according to claim 6 wherein the second power supply (30) also supplies power to a vehicle braking light (32).

8. A system according to claim 7 wherein the second method comprises calculating the distance travelled by the vehicle (10) by multiplying the wheel speed by the wheel rolling circumference.

9. A system according to claim 8 wherein the processor (22) is programmable, and calculates the wheel rolling circumference based on an input provided by a user according the vehicle (10) to which the system is fitted.

10. A vehicle braking system including a brake, a brake actuator (18a, 18b) by means of which the brake is operated, and an electronic control unit (22), the electronic control unit (22) being adapted to transmit a braking signal to the brake actuator (18a, 18b) to affect operation of the brake, wherein the electronic control unit (22) comprises an odometer system according to any one of claims 1 to 9.

11. A method of estimating the distance travelled by a vehicle (10) with at least one brake during a particular time period, the method including the steps of counting the number of times the vehicle brake is applied and calculating an estimate of the distance travelled during the time period based on the number of brake applications during the time period.

## Patentansprüche

1. Fahrzeugwegstreckenmessersystem, das einen elektronischen Prozessor (22) enthält, wobei der Prozessor (22) einen Eingang für ein Signal aufweist, das anzeigt, dass eine Bremse des Fahrzeugs (10), an welchem das Wegstreckenmessersystem angebracht ist, angezogen wurde, das ausgebildet ist, um mindestens einen Schätzwert der vom Fahrzeug (10) während eines bestimmten Zeitraums zurückgelegten Distanz unter Nutzung eines ersten Verfahrens basierend auf der Zahl von Anziehungen der Fahrzeugbremse während dieses Zeitraums zu berechnen.

2. System gemäß Anspruch 1, wobei das System ferner eine erste Stromversorgungseinheit (28), die den Prozessor (22) mit elektrischem Strom versorgt, und eine zweite Stromversorgungseinheit (30) enthält, die den Prozessor im Fall eines Ausfalls der ersten Stromversorgungseinheit (28) mit elektrischem Strom versorgt.

3. System gemäß Anspruch 1 oder 2, wobei der Prozessor (22) mit einem Eingang zum Empfangen eines Signals von einem Raddrehzahlsensor (26) her ausgestattet ist, wobei das Signal die Drehzahl eines mit dem Raddrehzahlsensor (26) assoziierten Rads darstellt, und ausgebildet ist, um die zurückgelegte Distanz unter Nutzung eines zweiten Verfahrens basierend auf dem am Raddrehzahlsensoreingang empfangenen Signal zu berechnen.

4. System gemäß Anspruch 2 und 3, wobei der Prozessor (22) ausgebildet ist, um das erste Verfahren zur Berechnung der vom Fahrzeug zurückgelegten Distanz zu nutzen, während der Prozessor mit Strom von der zweiten Stromversorgungseinheit (30) her versorgt wird, und um das zweite Verfahren zu nutzen, während der Prozessor mit Strom von der ersten Stromversorgungseinheit (28) her versorgt wird.

5. System gemäß einem der Ansprüche 2 bis 4, wobei die erste Stromversorgungseinheit (28), wenn sie aktiv ist, den Prozessor (22) kontinuierlich mit Strom versorgt.

6. System gemäß einem der Ansprüche 2 bis 5, wobei die zweite Stromversorgungseinheit (30) den Prozessor (22) nur mit Strom versorgt, wenn ein Erfordernis zum Bremsen des Fahrzeugs besteht.

7. System gemäß Anspruch 6, wobei die zweite Stromversorgungseinheit (30) auch eine Fahrzeugbremsenleuchte (32) mit Strom versorgt.

8. System gemäß Anspruch 7, wobei das zweite Verfahren das Berechnen der vom Fahrzeug (10) zurückgelegten Distanz umfasst, indem die Raddrehzahl mit dem Radabrollumfang multipliziert wird.

9. System gemäß Anspruch 8, wobei der Prozessor (22) programmierbar ist und den Radabrollumfang basierend auf einer Eingabe berechnet, die von einem Benutzer entsprechend dem Fahrzeug (10) vorgenommen wird, an welchem das System angebracht ist.

10. Fahrzeugbremssystem, das eine Bremse, ein Bremsstellglied (18a, 18b), mittels dessen die Bremse betätigt wird, und eine elektronische Steuereinheit (22) enthält, wobei die elektronische Steuereinheit (22) ausgebildet ist, um ein Bremssignal an das Bremsstellglied (18a, 18b) zu übertragen, um die Betätigung der Bremse zu bewirken, wobei die elektronische Steuereinheit (22) ein Wegstreckenmessersystem gemäß einem der Ansprüche 1 bis 9 umfasst.

11. Verfahren zum Schätzen der von einem Fahrzeug (10) mit mindestens einer Bremse während eines bestimmten Zeitraums zurückgelegten Distanz, wobei das Verfahren die Schritte des Zählens, wie oft die Fahrzeugbremse angezogen wird, und des Berechnens eines Schätzwerts der während des Zeitraums zurückgelegten Distanz basierend auf der Zahl von Bremsenanziehungen während des Zeitraums umfasst.

## Revendications

1. Un odomètre de véhicule comprenant un processeur électronique (22), le processeur (22) ayant une entrée pour un signal indiquant qu'un frein du véhicule (10) sur lequel l'odomètre est fixé a été actionné, étant adapté pour calculer au moins une estimation de la distance parcourue par le véhicule au cours d'une période donnée (10) selon une première méthode basée sur le nombre de freinages du véhicule au cours de cette période.

2. Un système conformément à la revendication 1, dans lequel le système comprend également une première alimentation électrique (28) qui alimente en électricité le processeur (22) et une deuxième alimentation électrique (30) qui alimente en électricité le processeur en cas de défaillance de la première alimentation (28).

3. Un système conformément à la revendication 1 ou 2, dans lequel le processeur (22) est muni d'une entrée pour recevoir un signal d'un capteur de vitesse de roue (26), le signal représentant la vitesse d'une roue associée au capteur de vitesse de roue (26), et est adapté pour calculer la distance parcourue selon une deuxième méthode reposant sur le signal reçu à l'entrée du capteur de vitesse de roue.

4. Un système conformément aux revendications 2 et 3, dans lequel le processeur (22) est adapté pour utiliser la première méthode pour calculer la distance parcourue par le véhicule lorsque le processeur est alimenté en électricité par la deuxième alimentation (30) et pour utiliser la deuxième méthode lorsque le processeur est alimenté en électricité par la première alimentation (28).

5. Un système conformément à n'importe laquelle des revendications 2 à 4, dans lequel, lorsqu'elle est activée, la première alimentation électrique (28) alimente le processeur (22) en électricité de manière continue.

6. Un système conformément à n'importe laquelle des revendications 2 à 5, dans lequel la deuxième alimentation électrique (30) alimente le processeur (22) en électricité seulement lorsqu'il y a une demande de freinage.

7. Un système conformément à la revendication 6, dans lequel la deuxième alimentation électrique (30) alimente également un feu de freinage de véhicule (32).

8. Un système conformément à la revendication 7, dans lequel la deuxième méthode suppose de calculer la distance parcourue par le véhicule (10) en multipliant la vitesse de roue par la circonférence de roulement de la roue.

9. Un système conformément à la revendication 8, dans lequel le processeur (22) est programmable et calcule la circonférence de roulement de la roue en fonction d'une entrée fournie par un utilisateur, selon le véhicule (10) sur lequel le système est monté.

10. Un système de freinage de véhicule comprenant un frein, un actionneur de frein (18a, 18b) au moyen duquel le frein est actionné et une unité de commande électronique (22), l'unité de commande électronique (22) étant adaptée pour transmettre un signal de freinage à l'actionneur de frein (18a, 18b) de façon à actionner le frein, dans lequel l'unité de commande électronique (22) se compose d'un odomètre conformément à n'importe laquelle des revendications 1 à 9.

11. Une méthode permettant d'estimer la distance parcourue par un véhicule (10) à l'aide d'au moins un frein pendant une période donnée, la méthode supposant de compter le nombre de fois que le frein du véhicule est actionné et de calculer une estimation de la distance parcourue pendant la période à partir du nombre de fois que le frein est actionné au cours de la période.
